# EUROPÄISCHE PATENTSCHRIFT

(11) **EP 3 303 099 B1**
(45) Veröffentlichungstag und Bekanntmachung des Hinweises auf die Patenterteilung: **02.08.2023**
(21) Anmeldenummer: 16725127.1
(22) Anmeldetag: 25.05.2016
(51) Int. Cl.: B62D 7/14

(54) **LENKSICHERUNG**
STEERING SAFETY DEVICE
SÉCURITÉ DE DIRECTION

(30) Priorität: 29.05.2015 DE 102015108520
(43) Veröffentlichungstag der Anmeldung: 11.04.2018
(73) Patentinhaber: SAF-HOLLAND GmbH, 63856 Bessenbach-Keilberg (DE)
(72) Erfinder: CHRIST, Armin, 63856 Bessenbach (DE); ZIEGLER, Peter, 79359 Riegel (DE)
(74) Vertreter: Müller Schupfner & Partner Patent- und Rechtsanwaltspartnerschaft mbB
(86) Internationale Anmeldenummer: PCT/EP2016/061788
(87) Internationale Veröffentlichungsnummer: WO 2016/193091

(56) Entgegenhaltungen:
- EP-A1- 2 537 733
- EP-A1- 2 676 868
- WO-A1-2008/040957
- DE-A1- 4 111 799
- ES-B3- 2 024 428
- JP-A- H0 357 775
- JP-A- H0 357 777
- JP-A- H03 114 976
- US-A- 6 086 074

## Beschreibung

Die vorliegende Erfindung betrifft eine Lenksicherung insbesondere zum Einsatz in Nutzfahrzeugen.

Lenksicherungen sind aus dem Stand der Technik bekannt. So werden insbesondere in Lenkachssystemen Sicherungen benötigt, welche eine Lenkbewegung einer Nachlauflenkachse oder einer sonstigen aktiv oder passiv gelenkten Achse bei Rückwärtsfahrt des Nutzfahrzeuges oder bei einem Systemausfall der Hydraulik verhindern. Dabei haben sich Sicherheits- bzw. Sicherungssysteme durchgesetzt, welche an den sich zueinander bewegenden Bauteilen des Lenksystems angeordnet sind und mechanisch, oder hydraulisch eine Lenkbewegung des Lenksystems verhindern. Diese Sicherungssysteme werden dabei außen an dem Lenksystem festgelegt. Die aus dem Stand der Technik bekannten Lenksysteme sind dabei nicht nur sehr schwer, sondern sie beanspruchen auch einen zu großen Anteil des im Fahrwerksbereich zur Verfügung stehenden Bauraumes. Außerdem sind sie anfällig gegen aufgewirbelte Teile und können im Einsatz des Nutzfahrzeuges durch Ablagerungen blockiert und somit funktionsuntüchtig werden.

Die EP 2 676 868 A1 offenbart eine Hinterradlenkung umfassend eine Zahnstangenwelle, eine Neutralstellungsverriegelungsvorrichtung, die die Bewegung der Zahnstangenwelle in einer Zahnstangenachsenrichtung begrenzt, und eine Stiftantriebsvorrichtung, welche einen Begrenzungsstift antreibt, wobei die Neutralstellungsverriegelungsvorrichtung einen Begrenzungsstift und einen in der Zahnstangenwelle ausgebildeten Stiftaufnahmeabschnitt aufweist.

Die EP 2 537 733 A1 zeigt ein Hinterradlenksystem umfassend eine hintere Zahnstangenwelle mit einer Ausnehmung und ein Stiftelement, das von der Außenseite der hinteren Zahnstangenwelle in die Ausnehmung hineingezogen werden kann, wobei das in einem vorgeschobenen Zustand angeordnete Stiftelement in die Ausnehmung eingepasst ist, um das Gleiten der hinteren Zahnstangenwelle in einer neutralen Position zu verriegeln.

Die EP 0 225 773 B1 offenbart eine Lenksteuerung für Fahrzeuge mit einer Kolbenzylindereinheit mit einem Stellkolben der in einem Stellzylinder geführt ist, wobei Verriegelungsmittel durch eine Feder derart gespannt sind, dass sie an der Kolbenzylindereinheit in der Geradeausfahrstellung angreifen, wobei die Verriegelungsmittel durch hydraulischen Druck außer Eingriff mit der Kolbenzylindereinheit gehalten werden. EP 0 225 773 B1 offenbart die folgenden Merkmale von Anspruch 1; Lenksicherung umfassend eine Stange, ein Gehäuse und eine Blockiereinheit,wobei die Stange am Gehäuse längs einer Stellachse (S) geführt ist,wobei die Blockiereinheit in einen ersten Zustand bringbar ist, in welchem sie außer Eingriff mit der Stange steht,wobei die Blockiereinheit in einen zweiten Zustand bringbar ist, in welchem sie mit der Stange in Eingriff steht und die Stange gegen Verlagerung längs der Stellachse (S) sichert,wobei die Stange einen Eingriffsabschnitt aufweist,wobei die Blockiereinheit ein Blockierelement aufweist,wobei im zweiten Zustand der Blockiereinheit das Blockierelement eine parallel zur Stellachse (S) wirkende Hinterschneidung mit dem Eingriffsabschnitt bildet,wobei das Blockierelement einen Halteabschnitt aufweist, an dem ein Haltemittel in Eingriff bringbar ist, um das Blockierelement von der Stange zu beabstanden und die Blockiereinheit im ersten Zustand zu halten, und wobei die Blockiereinheit einen Blockierträger aufweist, welcher am Gehäuse festgelegt ist,wobei das Gehäuse das Gehäuse eines Hydraulikzylinders oder eines pneumatisch betriebenen Zylinders ist,wobei am Blockierträger ein Rückstellmittel angreift, welches bei Entspannung die Blockiereinheit in den zweiten Zustand versetzt.

Aufgabe der vorliegenden Erfindung ist es, eine Lenksicherung bereitzustellen, welche besonders kompakt ausgebildet ist, eine Gewichtseinsparung ermöglicht und dennoch eine ausreichende Sicherheit gegen unbeabsichtigte Lenkbewegungen bietet.

Diese Aufgabe wird gelöst mit einer Lenksicherung gemäß Anspruch 1. Weitere Vorteile und Merkmale der vorliegenden Erfindung ergeben sich aus den abhängigen Ansprüchen.

Erfindungsgemäß umfasst die Lenksicherung eine Stange, ein Gehäuse und eine Blockiereinheit, wobei die Stange am Gehäuse längs einer Stellachse geführt ist, wobei die Blockiereinheit in einen ersten Zustand bringbar ist, in welchem sie außer Eingriff mit der Stange steht, wobei die Blockiereinheit in einen zweiten Zustand bringbar ist, in welchem sie mit der Stange in Eingriff steht und die Stange gegen Verlagerung relativ zur Stellachse sichert. Die wesentlichen Komponenten der Lenksicherung, Stange, Gehäuse und Blockiereinheit sind dabei vorzugsweise integrale Bestandteile eines Lenksystems des Nutzfahrzeuges. So ist die Stange vorzugsweise die Spurstange bzw. die Lenkstange einer aktiv gelenkten oder passiv gelenkten Nutzfahrzeugradaufhängung. Das Gehäuse ist besonders bevorzugt das Gehäuse eines Hydraulikzylinders oder eines pneumatisch betriebenen Zylinders. Die Blockiereinheit ist vorzugsweise am Gehäuse festgelegt und steht in ihrem zweiten Zustand in unmittelbarem Eingriff mit der Stange. Dies gewährleistet eine besonders kompakte Bauweise der Lenksicherung, da die Lenksicherung bereits vorhandene Komponenten der Nutzfahrzeugradaufhängung nutzt und somit nur einen geringen zusätzlichen Bauraumbedarf zu einer Lenkachse ohne Lenksicherung aufweist. Die Blockiereinheit weist dabei vorzugsweise im Wesentlichen zwei Zustände auf, wobei sie in einem ersten Zustand außer Eingriff mit der Stange steht, wobei eine Verlagerung der Stange längs einer Stellachse möglich ist. In einem zweiten Zustand ist die Blockiereinheit dazu ausgelegt, die Stange gegen Verlagerung längs der Stellachse zu sichern. Dabei meint eine Verlagerung der Stange längs der Stellachse vorzugsweise eine Verlagerung relativ zum Gehäuse bzw. eine Verlagerung relativ zum Rahmen des Nutzfahrzeuges, welche eine Lenkbewegung der Räder des Nutzfahrzeuges zur Folge hat. Im zweiten Zustand, wenn die Blockiereinheit im Eingriff mit der Stange steht, ist somit eine Lenkbewegung der Räder des Nutzfahrzeuges verhindert. Die Stange ist am Gehäuse vorzugsweise längs der Stellachse geführt, was mit anderen Worten bedeutet, dass eine Verlagerung quer zur Stellachse vorzugsweise durch das Gehäuse verhindert wird. Mit Vorteil ist eine Neutrallage der Stange definiert, in welcher die Stange durch die Blockiereinheit gehalten werden kann. Die Neutrallage der Stange ist dabei insbesondere bevorzugt die Stellung der Stange längs der Stellachse bei Geradeausfahrt der lenkbaren Räder des Nutzfahrzeuges. Mit Vorteil ist die Blockiereinheit derart an oder in dem Gehäuse integriert, dass nur ein sehr kleiner Bauraumbedarf für die Blockiereinheit benötigt wird. Weiterhin vorteilhaft ist der Kontaktbereich zwischen der Blockiereinheit und der Stange durch das Gehäuse der Lenksicherung gegen die Einwirkung von Schmutz und ähnlichen Umwelteinflüssen geschützt.

Erfindungsgemäß weist die Stange einen Eingriffsabschnitt auf, wobei die Blockiereinheit ein Blockierelement aufweist, wobei im zweiten Zustand der Blockiereinheit das Blockierelement eine parallel zur Stellachse wirkende Hinterschneidung mit dem bzw. für den Eingriffsabschnitt bzw. für die Stange bildet. Der Eingriffsabschnitt an der Stange ist vorzugsweise als Vorsprung oder als Rücksprung ausgebildet und ist dafür ausgelegt, mit einem Blockierelement der Blockiereinheit eine Hinterschneidung zu bilden, welche parallel zur Stellachse wirkt. Auf diese Weise kann durch den Eingriff des Blockierelements mit dem Eingriffsabschnitt der Stange im zweiten Zustand der Blockiereinheit verhindert werden, dass sich die Stange parallel oder längs zur Stellachse relativ zum Blockierelement verlagert. Weiterhin bevorzugt ist das Blockierelement gegen Verlagerung relativ zum Gehäuse und/oder relativ zu den festen Komponenten des Rahmens eines Nutzfahrzeuges längs der Stellachse oder parallel zur Stellachse gesichert. Auf diese Weise sichert das Blockierelement die Stange derart gegen Verlagerung, dass eine Lenkbewegung ausgeschlossen ist. Vorzugsweise wirkt die Hinterschneidung zwischen Blockierelement und Eingriffsabschnitt in beiden Richtungen parallel zur Stellachse.

Erfindungsgemäß weist das Blockierelement einen Halteabschnitt auf, an dem ein Haltemittel in Eingriff bringbar ist, um das Blockierelement von der Stange zu beabstanden und die Blockiereinheit im ersten Zustand zu halten. Vorzugsweise ist das Haltemittel ein Bauteil oder ein Medium, welches dafür ausgelegt ist, das Blockierelement von der Stange und insbesondere von dem formschlüssigen Eingriff des Blockierelements mit der Stange abzuhalten. Das Haltemittel ist dabei Druckluft. Solange in der Lenksicherung also das Haltemittel derart zur Verfügung steht, dass es einen Eingriff zwischen dem Blockierelement und der Stange verhindert, ist eine Lenkbewegung der Nutzfahrzeugradaufhängung möglich. Erst wenn das Haltemittel durch einen Systemausfall oder durch eine kontrollierte, beabsichtigte Verschaltung, beispielsweise bei Rückwärtsfahrt des Nutzfahrzeuges, derart von einem Eingriff mit dem Halteabschnitt des Blockierelements gelöst wird, kann das Blockierelement in seinen zweiten Zustand versetzt werden, in dem es in Eingriff mit dem Eingriffsabschnitt der Stange gelangt und eine Lenkbewegung verhindert. Bei einem als Druckluft ausgebildeten Haltemittel ist dies insbesondere das Absinken des Druckes in der Druckluft.

In einer nicht erfindungsgemäßen Ausführungsform kann das Haltemittel auch ein Teil des Hydraulikystems sein, welches auch die Bewegung bzw. die Lenkbewegung der Stange im Gehäuse verursacht bzw. durchführt. In dem Moment, in dem das Hydrauliksystem ausfällt und der Druck sowohl im Gehäuse als auch auf den Halteabschnitt absinkt, kann das Blockierelement automatisch in einen Eingriff mit dem Eingriffsabschnitt der Stange gelangen und somit ein Systemausfall des Hydrauliksystems unmittelbar eine Blockierung der Lenkung, vorzugsweise in der Neutrallage resultieren.

Bevorzugt ist das Blockierelement entlang einer Blockierachse relativ zur Stange verlagerbar und quer zur Blockierachse gegen Verlagerung relativ zum Gehäuse gesichert, wobei die Blockierachse quer zur Stellachse steht. Insbesondere bevorzugt weist die Blockiereinheit eine Führung für das Blockierelement auf, welche eine Verlagerung des Blockierelements relativ zu den restlichen Bauteilen der Blockiereinheit lediglich längs einer Blockierachse zulässt. Die Blockierachse ist dabei vorzugsweise quer zur Stellachse ausgerichtet. Besonders bevorzugt ist die Blockierachse dabei genau senkrecht bzw. orthogonal zur Stellachse ausgerichtet. Es versteht sich in diesem Zusammenhang, dass die Geometrie der Blockiereinheit, welche eine Verlagerung des Blockierelements quer zur Blockierachse verhindert, auch die Kraft aufnimmt, welche von der Stange auf das Blockierelement parallel zur Stellachse bzw. längs der Stellachse übertragen wird. Besonders bevorzugt kann auch eine entsprechende Führungsgeometrie des Gehäuses der Lenksicherung eine Verlagerung des Blockierelements längs der Stellachse bzw. quer zur Blockierachse verhindern. In diesem bevorzugten Fall ist vorzugsweise ein Teil der Blockiereinheit einstückig mit dem Gehäuse ausgeführt.

Erfindungsgemäß weist die Blockiereinheit einen Blockierträger auf, welcher am Gehäuse festgelegt ist, wobei am Blockierträger ein Rückstellmittel eingreift bzw. sich daran abstützt, welches bei Entspannung die Blockiereinheit in den zweiten Zustand versetzt. Besonders bevorzugt übernimmt dabei der Blockierträger der Blockiereinheit die Führung des Blockierelements. Weiterhin bevorzugt weist der Blockierträger eine Geometrie auf, an welcher sich ein Rückstellmittel abstützen kann, um eine Rückstellkraft auf das Blockierelement auszuüben, welche das Blockierelement in den zweiten Zustand verlagert. Besonders bevorzugt ist das Rückstellmittel somit im ersten Zustand der Blockiereinheit vorgespannt. Das Kräfteverhältnis zwischen dem zuvor beschriebenen Haltemittel und dem Rückstellmittel sorgt somit für eine Verlagerung des Blockierelements in den ersten Zustand oder in den zweiten Zustand. Das Rückstellmittel kann dabei vorzugsweise Druckluft oder ein elastisch verformbarer Körper sein. Der Vorteil eines Druckluftsystems ist, dass mittels einer Steuerung, gezielt und nur zu ausgewählten Zeitpunkten die Kraft auf das Blockierelement aufbringbar ist, um dieses in die zweite Stellung zu verlagern. Die kann mittels eines Hydraulik- oder Druckluftkreislaufes, welcher unabhängig von der Lenkhydraulik funktioniert, mit ausreichender Sicherheit durchgeführt werden. Als elastischer Körper kommen hierbei insbesondere metallische Federn, wie beispielsweise Blattfedern oder Spiralfedern, oder aus einem elastisch stark verformbaren Gummimaterial zum Einsatz. Vorteilhaft beim Einsatz eines einfachen, elastisch verformbaren Körpers ist, dass kein weiteres Hydraulik-oder Druckluftsystem vorgesehen und geregelt werden muss, was die Lenksicherung einfach, kostengünstig und sicher macht.

Vorzugsweise gelangt die Blockiereinheit in den zweiten Zustand, wenn die vom Rückstellmittel auf das Blockierelement übertragene Kraft, die von dem Haltemittel auf das Blockierelement übertragene Kraft überwiegt. Besonders bevorzugt ist es dabei, dass das Rückstellmittel jeweils mit einer gleichbleibenden Rückstellkraft bzw. Vorspannkraft auf das Blockierelement wirkt und nur dann, wenn die Kraft des Haltemittels sich reduziert, die Kraft des Rückstellmittels derart überwiegt, dass das Blockierelement in Richtung der Stange verlagert wird, um die Blockiereinheit in ihren zweiten Zustand zu bringen. Dabei ist es bevorzugt, dass das Rückstellmittel derart ausgelegt ist, dass die von ihm aufbringbare Kraft ausreichend ist, um das Blockierelement in formschlüssigem Eingriff mit der Stange zu halten und andererseits aber klein genug ist, um durch das Haltemittel derart neutralisiert zu werden, dass das Blockierelement, wenn Lenkbewegungen der Stange erwünscht sind, außer Eingriff mit der Stange zu halten.

Besonders bevorzugt weist der Blockierträger ein Blockiergehäuse und einen Deckel auf. Das Blockiergehäuse kann dabei Teil eines pneumatischen Zylinders sein, wobei das Blockierelement gleichzeitig einen Kolben aufweist, welcher durch Luftdruck vorzugsweise von der Stange weggepresst wird. Auf der der Druckluft gegenüberliegenden Seite des Blockierelements wirkt vorzugsweise das Rückstellmittel, welches sich an dem Blockiergehäuse und/oder an dem Deckel des Blockierträgers abstützt. Eine Ausbildung des Blockierträgers aus Blockiergehäuse und Deckel ermöglicht eine besonders einfache Montage, da zunächst sämtliche beweglichen Teile wie Blockierelement und Rückstellmittel in das Blockiergehäuse eingesetzt werden können und anschließend der Deckel aufgesetzt und form-, kraft- und/oder stoffschlüssig am Blockiergehäuse festlegbar ist.

Erfindungsgemäß ist der Blockierträger über ein Gewinde und insbesondere bevorzugt stoffschlüssig an dem Gehäuse festgelegt. Alternativ zur einstückigen Ausbildung des Blockierträgers mit dem Gehäuse der Lenksicherung ist es bevorzugt, dass die Blockiereinheit als separate Baugruppe vormontierbar ist und anschließend der Blockierträger der Blockiereinheit über ein Gewinde an dem Gehäuse festlegbar ist.

Alternativ bevorzugt ist der Blockierträger zumindest abschnittsweise einstückig mit dem Gehäuse ausgeführt. Insbesondere bevorzugt ist dabei der als Zylinder ausgeführte Teil des Blockierträgers einstückig mit dem Gehäuse ausgeführt. Dabei ist der zylinderförmige Teil des Blockierträgers vorzugsweise als einstückiges Gussteil gemeinsam mit dem Gehäuse der Lenksicherung hergestellt. Es lässt sich auf diese Weise eine besonders einfache Montage der Lenksicherung herstellen, da nur wenige Bauteile zusammengesetzt werden müssen, um die Lenksicherung zu montieren. Außerdem ist die Festigkeit der Verbindung zwischen der Blockiereinheit und dem Gehäuse mit Vorteil wesentlich fester als wenn das Blockiergehäuse in das Gehäuse der Lenksicherung eingeschraubt wäre. Insbesondere ist hierbei auch nicht die Gefahr vorhanden, dass sich der Blockierträger und somit die Blockiereinheit von dem Gehäuse durch Schwingungen an der Lenksicherung löst. Bei dieser Ausführungsform ist es bevorzugt, dass der Deckel des Blockiergehäuses in das einstückig mit dem Gehäuse der Lenksicherung verbundene Blockiergehäuse einschraubbar ist. Dabei stützt sich das Rückstellmittel vorzugsweise an dem Deckel ab. Auf diese Weise kann als Montagereihenfolge zuerst das Blockierelement in das Blockiergehäuse eingesetzt werden, anschließend das Rückstellmittel und abschließend kann der Deckel auf das Blockiergehäuse aufgeschraubt werden, wobei das Rückstellmittel gegen das Blockierelement vorgespannt wird.

In einer weiteren bevorzugten Ausführungsform ist der Eingriffsabschnitt als Rücksprung ausgebildet, wobei der Eingriffsabschnitt vorzugsweise einen Fasenbereich aufweist und wobei der Fasenbereich schräg zur Stellachse steht. Der Eingriffsabschnitt der Stange ist vorzugsweise als Rücksprung ausgebildet, was in einer ersten Ausführungsform zweckmäßigerweise einen rotationssymmetrisch ausgebildeten Eingriffsabschnitt beinhaltet. Alternativ bevorzugt kann der Eingriffsabschnitt nur auf einer Seite der Stange vorgesehen sein. In diesem Fall ist die Stange insbesondere gegen Verdrehung um die Stellachse gesichert. Weiterhin bevorzugt weist der Eingriffsabschnitt einen Fasenbereich auf, welcher mit anderen Worten eine Anschrägung des Eingriffsabschnitts ist. Dieser Fasenbereich erleichtert das Hineingleiten der Stange in eine gesicherte Stellung, wenn sich die Blockiereinheit in ihrem zweiten Zustand befindet. Insbesondere wenn der zweite Zustand der Blockiereinheit dann ausgelöst wird, wenn sich die Lenkung des Nutzfahrzeuges noch nicht in der Neutralstellung befindet, wird die Blockiereinheit, insbesondere das Blockierelement zunächst in einem Bereich der Stange zur Auflage gelangen, welcher außerhalb des Eingriffsabschnitts liegt. Damit, wenn sich die Stange längs der Stellachse weiter in der Richtung verlagert, in der die Neutralstellung erreicht ist, das Blockierelement auf einfache Weise in Eingriff mit dem Eingriffsabschnitt gelangen kann, ist der Fasenbereich vorgesehen, um ein allmähliches Hineingleiten des Blockierelements in den Eingriffsabschnitt zu erlauben. Als Stellung des Fasenbereiches schräg zur Stellachse wird insbesondere bevorzugt ein Winkel von ca. 20 bis 70° zur Stellachse, jeweils in Schnittansicht parallel zur Schwenkachse oder in Seitenansicht orthogonal zur Schwenkachse gesehen, definiert.

Weiterhin bevorzugt weist der Eingriffsabschnitt einen Sperrbereich auf, wobei der Sperrbereich zumindest bereichsweise senkrecht zur Stellachse steht. Der Stellbereich dient insbesondere dazu, das Blockierelement in Eingriff mit dem Eingriffsabschnitt zu halten. Hierfür weist der Sperrbereich vorzugsweise zwei im Wesentlichen senkrecht zur Stellachse ausgerichtete Flanken auf, welche eine Hinterschneidung mit dem Blockierelement bilden und verhindern, dass das Blockierelement allein durch eine Verlagerung der Stange längs der Stellachse mit hoher Kraft wieder außer Eingriff mit dem Eingriffsabschnitt geraten kann. Der Sperrbereich des Eingriffsabschnitts gewährleistet somit, dass das Blockierelement aktiv, das heißt durch Anlegen einer Kraft, welche der Kraft des Rückstellmittels entgegenwirkt, außer Eingriff mit dem Eingriffsabschnitt der Stange gebracht werden kann. Insbesondere bevorzugt ist der Sperrbereich des Eingriffsabschnitts in der Seitenansicht oder in der Schnittansicht, im Wesentlichen rechteckig ausgebildet.

Insbesondere bevorzugt ist das Gehäuse als Hydraulikzylinder ausgebildet, wobei an der Stange ein Kolben festlegbar ist, welcher hydraulisch oder pneumatisch betrieben eine Kraft längs der Stellachse auf die Stange überträgt. Insbesondere bevorzugt ist das Gehäuse der Lenksicherung nicht allein als Führung der Stange vorgesehen, sondern ist gleichzeitig auch als Hydraulikzylinder ausgebildet, wobei die Stange einen entsprechend mit dem Hydraulikzylinder in Wechselwirkung stehenden Kolben aufweist. Auf diese Weise kann eine Integration der Funktion eines Hydraulikzylinders mit der Funktion einer Lenksicherung im Rahmen der vorliegenden Erfindung vorgenommen werden. Hierdurch sind insbesondere der Bauraumbedarf und das Gewicht des Fahrwerks des Nutzfahrzeuges reduziert.

In einer ersten bevorzugten Ausführungsform sind zwei Kolben an der Stange festgelegt, wobei der Eingriffsbereich zwischen den Kolben an der Stange angeordnet ist. Insbesondere bevorzugt weist der Hydraulikzylinder somit zwei Kammern auf, welche räumlich voneinander durch jeweils zwei Kolben beabstandet werden, wobei in einem Bereich zwischen den beiden Kolben der Eingriffsabschnitt und somit auch der Bereich, in welchem die Blockiereinheit in das Gehäuse des Hydraulikzylinders hineinragt, vorgesehen ist. Der Vorteil bei dieser Ausführungsform ist, dass der Bereich, in welchem die Blockiereinheit mit der Stange in Eingriff gelangt, frei von Hydraulikfluid gehalten werden kann, da die beiden Kolben jeweils den Eingriffsbereich der Stange gegen Hydraulikfluid abdichten. Es versteht sich, dass alternativ zu Hydraulikfluid auch Druckluft bei der hier beschriebenen Ausführungsform zum Einsatz gelangen kann.

Insbesondere bevorzugt weist das Gehäuse zwei Anschlüsse auf, über welche ein Fluid in das Gehäuse ein- und aus dem Gehäuse ausleitbar ist. Das als Hydraulik-oder Pneumatikzylinder ausgelegte Gehäuse ist somit als doppelt wirkender Zylinder ausgebildet. Mit anderen Worten bedeutet dies, dass das als doppelt wirkender Zylinder ausgelegte Gehäuse über die jeweilige Bedrückung einer der beiden Kammern eine Kraft in die zwei möglichen Richtungen längs der Stellachse auf die Stange übertragen kann.

In einer alternativen Ausführungsform weist die Stange nur einen Kolben auf, wobei durch diese Ausführungsform insbesondere Bauraum und Gewicht an der Lenksicherung eingespart werden kann. Hierfür sind jedoch bessere Abdichtungen der Blockiereinheit gegen das Eintreten von Druckluft oder Hydraulikfluid aus dem Gehäuse notwendig.

Bevorzugt ist die Stange die Spurstange eines Lenksystems, wobei die Blockiereinheit in ihrem zweiten Zustand unmittelbar an der Stange angreift. Mit anderen Worten sind somit keine weiteren Bauteile an der Stange oder an dem Gehäuse eines Lenkzylinders eines Nutzfahrzeuges erforderlich, um eine entsprechende Sicherung gegen Lenkbewegungen bei Systemausfall oder bei Rückwärtsfahrt des Nutzfahrzeuges zu erreichen. Es kann auf diese Weise insbesondere Gewicht und der Bauraumbedarf reduziert werden.

Weitere Vorteile und Merkmale der vorliegenden Erfindung ergeben sich aus der nachfolgenden Beschreibung mit Bezug auf die beigefügten Figuren. Es versteht sich dabei, dass Merkmale, die nur in einer der Figuren oder einer der Ausführungsformen offenbart sind, auch in anderen Ausführungsformen eingesetzt werden können, sofern dies nicht aufgrund technischer Gegebenheiten oder explizit ausgeschlossen ist. Es zeigen:
- Fig. 1: eine teilweise geschnittene Ansicht einer ersten Ausführungsform der erfindungsgemäßen Lenksicherung,
- Fig. 2: eine Ansicht der in Fig. 1 gezeigten Ausführungsform der Lenksicherung im zweiten Zustand,
- Fig. 3: eine teilweise geschnittene Ansicht einer weiteren nicht beanspruchten Ausführungsform der Lenksicherung,
- Fig. 4: eine Ansicht einer bevorzugten Ausführungsform der erfindungsgemäßen Stange, und
- Fig. 5: geschnittene Ansicht einer weiteren bevorzugten Ausführungsform der erfindungsgemäßen Lenksicherung.

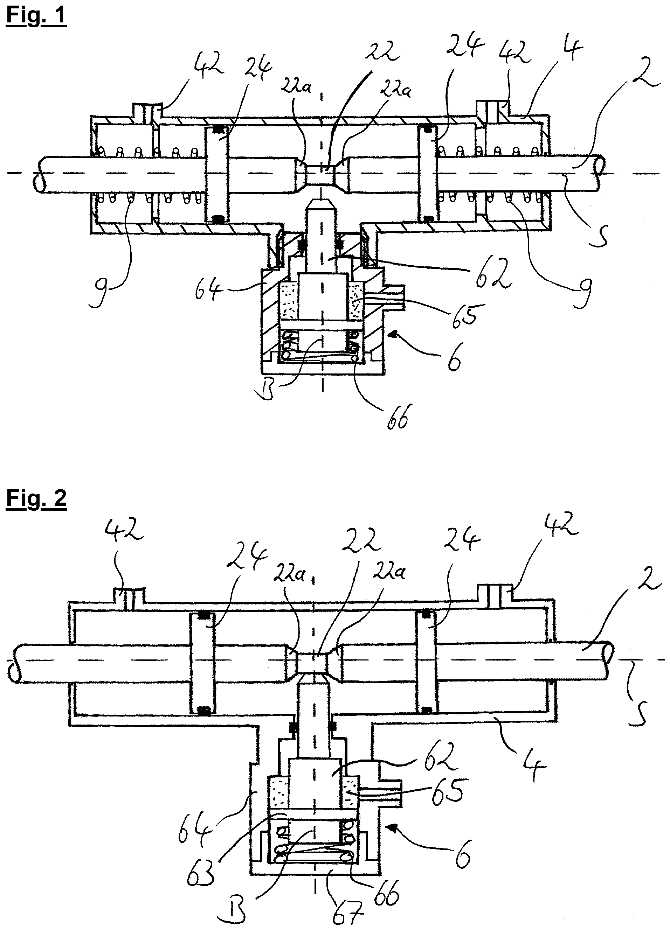

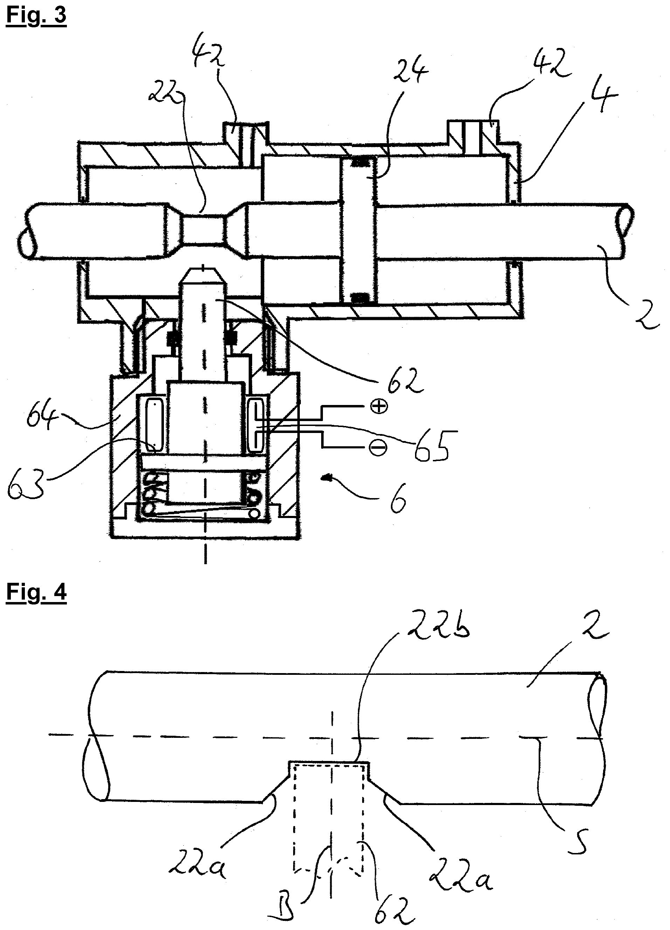

Bei der in Fig. 1 gezeigten bevorzugten Ausführungsform der Lenksicherung ist eine Stange 2 längs einer Stellachse S in einem Gehäuse 4 verlagerbar geführt. Die Stange 2 weist vorzugsweise zwei Kolben 24 auf, welche mit Dichtungen versehen fluiddicht in dem von Gehäuse 4 gebildeten Hohlraum längs der Stellachse S gleiten können. Das Gehäuse 4 weist vorzugsweise zwei Anschlüsse 42 auf, über welche ein Druckmedium, beispielsweise Hydraulikfluid oder Druckluft, in die jeweils rechts oder links der Kolben 24 gelegenen Druckkammern eingeleitet und aus diesen wieder herausgeleitet werden kann. Die Anschlüsse 42 sind voneinander beabstandet und vorzugsweise in der Nähe der Stirnwandungen des Gehäuses 4 angeordnet. Das Gehäuse 4 und die Stange 2 mit den Kolben 24 ist somit als doppelt wirkender Hydraulikzylinder ausgebildet. Benachbart zu den Anschlüssen 42 sind Anschläge für den oder die Kolben 24 vorgesehen, damit diese sich nicht an den Anschlüssen 42 vorbei verlagern können. Diese Anschläge sind zwar in Fig.2 und 3 nicht explizit erwähnt, sind aber auch in den dort gezeigten Ausführungsformen vorzugsweise vorhanden. An dem Gehäuse 4 festgelegt ist vorzugsweise eine Blockiereinheit 6. Die Blockiereinheit 6 weist einen Blockierträger 64 und ein Blockierelement 62 auf.

Das Blockierelement 62 ist in dem Blockierträger 64 derart geführt, dass es nur eine Verlagerung längs einer Blockierachse B ausführen kann. Auf seiner der Stange 2 abgewandten Seite weist das Blockierelement 62 einen Halteabschnitt 63 auf, auf dessen einer Seite ein Rückstellmittel 66 angreift und auf dessen anderer Seite ein Haltemittel vorgesehen ist. Das Haltemittel 65 ist Druckluft, welche in die Druckkammer des Blockierträgers 64, welcher als Zylinder ausgebildet ist, eingefüllt wurde. In einer nicht beanspruchten Alternative hierzu kann das Haltemittel 65 auch als Piezoelement, wie in Fig.3 gezeigt ausgebildet sein. Fig. 1 zeigt die Blockiereinheit 6 dabei in ihrem ersten Zustand, in dem das Blockierelement 62 außer Eingriff mit der Stange 2, insbesondere mit dem Eingriffsabschnitt 22 der Stange 2 steht. In diesem ersten Zustand der Blockiereinheit 6 überwiegt die vom Haltemittel 65 auf den Halteabschnitt 63 übertragene Kraft die vom Rückstellmittel 66 auf den Halteabschnitt 63 übertragene Kraft. Weiterhin zeigt Fig. 1, dass der Eingriffsabschnitt 22 der Stange 2 zwei Fasenbereiche 22a aufweist. Die Fasenbereiche 22a korrespondieren insbesondere bevorzugt derart mit dem Blockierelement 62, dass dieses durch eine Verlagerung der Stange 2 längs der Stellachse S leichter in formschlüssigen Eingriff mit dem Eingriffsabschnitt 22 gebracht werden kann. Zur Unterstützung der Rückstellung der Stange 2 in die Neutrallage sind bevorzugt zwei Federelement 9 vorgesehen, welche jeweils zwischen einer Seite des Kolbens 24 und der Stirnwand des Gehäuses 4 angeordnet ist. Die Federelemente 9 erzeugen jeweils eine längs der Stellachse S wirkende Kraft, welche den Kolben 24 (Fig. 3) oder die Kolben 24 (Fig. 1, 2 und 5) in Richtung der Neutrallage der Stange 2 vorspannt. Die Federelemente 9 sind zwar nur in Fig. 1 gezeigt, sind aber mit Vorteil auch bei den Ausführungsformen der Figuren 2, 3 und 5 zwischen dem Gehäuse 4 und dem oder den Kolben 24 angeordnet. Die Federelemente 9 unterstützen die Rückstellung der Stange 2 in die Neutrallage relativ zum Gehäuse 4 und gewährleisten so für alle Ausführungsformen im Rahmen der vorliegenden Erfindung, dass bei einem Systemausfall eine zügige Rückstellung der Lenkung in die Geradeausfahrstellung erfolgt, in welcher die Blockiereinheit 6 die Stange 2 anschließend sichert.

Fig. 2 zeigt eine der in Fig. 1 gezeigten Ausführungsform ähnliche Ausführungsform der Lenksicherung, wobei die Blockiereinheit 6 in ihrer zweiten Stellung vorliegt.

Weiterhin ist bei der in Fig.2 gezeigten Ausführungsform im Unterschied zu der in Fig. 1 gezeigten Variante, der Blockierträger 64 größtenteils einstückig mit dem Gehäuse 4 ausgeführt. Nur der Deckel 67 wird hier nach dem Einführen des Blockierelements 62 und des Rückstellmittels 66 auf geschraubt, was die Montage vereinfacht und eine hohe Stabilität der Schnittstelle zwischen Gehäuse 4 und Blockiereinheit 6 gewährleistet. Es versteht sich, dass sowohl die einstückige als auch die mehrteilige Ausführung dieser Schnittstelle in allen anderen hier gezeigten Varianten der Erfindung zum Einsatz gelangen kann. In der zweiten Stellung der Blockiereinheit 6 steht das Blockierelement 62 in Eingriff mit dem Eingriffsabschnitt 22 der Stange 2. Dabei hat sich im Vergleich zu dem in Fig. 1 gezeigten ersten Zustand das Blockierelement 62 längs der Blockierachse B in Richtung der Stange 2 verlagert und sitzt nun im Eingriffsbereich 22 auf der Stange 2 auf. In diesem Zustand ist vorzugsweise die vom Haltemittel 65 aufgebrachte Kraft kleiner als die Kraft des Rückstellmittels 66. Das Haltemittel 65 ist dabei vorzugsweise mit dem Druckluftsystem der gesamten Lenkung des Nutzfahrzeuges gekoppelt, so dass bei Systemausfall im Druckluftsystem des Nutzfahrzeuges der Druck im Haltemittel 65 automatisch sinkt, so dass die Rückstellkraft des Rückstellmittels 66 vom Haltemittel 65 aufgebrachte Kraft überwiegt und schließlich das Blockierelement 62 derart verlagert, dass die Blockiereinheit 6 in den zweiten Zustand versetzt ist. In dem in Fig. 2 gezeigten zweiten Zustand ist eine Verlagerungsbewegung der Stange 2 längs der Stellachse S relativ zum Gehäuse 4 und zur Blockiereinheit 6 nicht mehr möglich. Um die Lenksicherung wieder in den in Fig. 1 gezeigten ersten Zustand zu versetzen, muss der Druck des Haltemittels 65 erhöht werden, so dass die Kraft des Haltemittels 65 die Rückstellkraft des Rückstellmittels 66 überwiegt und schließlich das Blockierelement 62 wieder außer Eingriff mit der Stange 2 gebracht werden kann.

Fig. 3 zeigt eine alternative Ausführungsform, bei der die Stange 2 nur einen Kolben 24 aufweist. Bei dieser Ausführungsform ist die Bewegungsfreiheit der Stange 2 längs der Stellachse S innerhalb des Gehäuses 4 durch Anschläge begrenzt, so dass insbesondere der Eingriffsbereich 22 nicht an den linken Wandbereich des Gehäuses gelangen kann. In diesem Fall wäre die Dichtheit der Verbindung aus Gehäuse 4 und Stange 2 nicht mehr gewährleistet. Bei der in Fig. 3 gezeigten nicht beanspruchten Ausführungsform wird im Vergleich zu den in Fig. 1 und 2 gezeigten Ausführungsformen ein wesentlich geringerer Bauraum für die Lenksicherung benötigt. Bevorzugt kann auch der in Fig. 3 gezeigte Blockierträger 64 im Wesentlichen einstückig mit dem Gehäuse 4 der Lenksicherung ausgeführt sein, wie in Fig. 2 gezeigt. Das als Piezoelement ausgebildete Haltemittel 65 dehnt sich vorzugsweise aus, wenn eine Spannung angelegt wird, wobei das Blockierelement 62 im ersten Zustand gehalten wird. Fällt die Spannung unter einen bestimmten Wert, so zieht sich das Piezoelement zusammen und das Rückstellmittel 66 verlagert das Blockierelement 62 in die zweite Stellung. Weiterhin bevorzugt kann, anstelle des als Piezoelement ausgebildeten Haltemittels 65, ein unter Druck stehendes Fluid zum Einsatz gelangen, wie dies in Fig. 1 und 2 offenbart ist.

Fig. 4 zeigt eine bevorzugte Ausführungsform der Stange 2, wobei der Eingriffsbereich 22 der Stange 2 Fasenbereiche 22a und einen Sperrbereich 22b aufweist. Alternativ zu dieser gezeigten Ausführungsform kann der Eingriffsabschnitt 22 auch nur einen Sperrbereich 22b aufweisen und keine Fasenbereiche 22a. Aufgabe des Sperrbereiches 22b ist insbesondere das sichere Halten des gestrichelt dargestellten Blockierelements in der zweiten Stellung, so dass die Stange mit hoher Sicherheit gegen Verlagerung relativ bzw. längs der Stellachse S gesichert ist. Um eine Lenkbewegung der Stange 2 wieder zuzulassen, muss das Blockierelement 62 längs der Blockierachse B außer Eingriff mit dem Eingriffsabschnitt 22 insbesondere mit dem Sperrbereich 22b des Eingriffsabschnitts 22 gebracht werden.

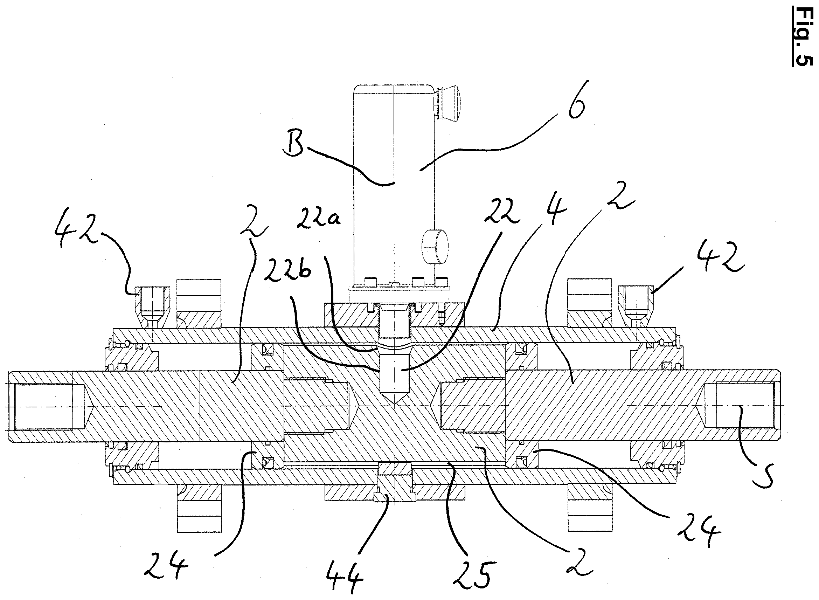

Fig. 5 zeigt eine weitere bevorzugte Ausführungsform der Lenksicherung, bei welcher die Stange 2 mit Vorteil mehrteilig ausgebildet ist. Die mehrteilige Stange 2 ist dabei leichter zu montieren, wobei besonders bevorzugt die zwei äußeren Stangenabschnitte, welche eine Befestigungsgeometrie zur Festlegung an den Lenkschenkeln der Räder des Nutzfahrzeuges aufweisen, in den inneren Stangenabschnitt eingeschraubt sind, welcher den Eingriffsabschnitt 22 und die Kolben 24 umfasst. Weiterhin weist die Stange 2 einen Führungsabschnitt 25 auf, in welchen ein Führungselement 44 eingreift die Stange 2 gegen Verdrehung um die Stellachse S relativ zum Gehäuse 4 zu sichern. Das Führungselement 44 und der korrespondierende Führungsabschnitt 25 können auch bei den Ausführungsformen der Figuren 1 - 4 bevorzugt vorgesehen sein. Bei der in Fig.5 dargestellten bevorzugten Ausführungsform ist das Führungselement 44 ein Gewindestift, welcher in den als Längsnut ausgebildeten Führungsabschnitt 25 eingreift. Die Verdrehsicherung der Stange 2 gewährleistet insbesondere bei den Ausführungsformen der Figuren 4 und 5, bei denen der Eingriffsabschnitt 22 nicht rotationssymmetrisch um die Schwenkachse S ausgeführt ist, die stets richtige Ausrichtung der Stange 2 zum Gehäuse 4 und der daran festgelegten Blockiereinheit 6.

**Bezugszeichenliste:**

| | | | |
|---|---|---|---|
| 2 - | Stange | 44 - | Führungselement |
| 4 - | Gehäuse | 62 - | Blockierelement |
| 6 - | Blockiereinheit | 63 - | Halteabschnitt |
| 9 - | Federelement | 64 - | Blockierträger |
| 22 - | Eingriffsabschnitt | 65 - | Haltemittel |
| 22a - | Fasenbereich | 66 - | Rückstellmittel |
| 22b - | Sperrbereich | 67 - | Deckel |
| 24 - | Kolben | B - | Blockierachse |
| 25 - | Führungsabschnitt | S - | Stellachse |
| 42 - | Anschluss | | |
| B - | | Blockierachse | |
| S - | | Stellachse | |

## Patentansprüche

1. Lenksicherung umfassend eine Stange (2), ein Gehäuse (4) und eine Blockiereinheit (6),
wobei die Stange (2) am Gehäuse (4) längs einer Stellachse (S) geführt ist,
wobei die Blockiereinheit (6) in einen ersten Zustand bringbar ist, in welchem sie außer Eingriff mit der Stange (2) steht,
wobei die Blockiereinheit (6) in einen zweiten Zustand bringbar ist, in welchem sie mit der Stange (2) in Eingriff steht und die Stange (2) gegen Verlagerung längs der Stellachse (S) sichert,
wobei die Stange (2) einen Eingriffsabschnitt (22) aufweist,
wobei die Blockiereinheit (6) ein Blockierelement (62) aufweist,
wobei im zweiten Zustand der Blockiereinheit (6) das Blockierelement (62) eine parallel zur Stellachse (S) wirkende Hinterschneidung mit dem Eingriffsabschnitt (22) bildet,
wobei das Blockierelement (62) einen Halteabschnitt (63) aufweist, an dem ein Haltemittel (65) in Eingriff bringbar ist, um das Blockierelement (62) von der Stange (2) zu beabstanden und die Blockiereinheit (6) im ersten Zustand zu halten,
wobei das Haltemittel (65) Druckluft ist, und
wobei die Blockiereinheit (6) einen Blockierträger (64) aufweist, welcher über ein Gewinde am Gehäuse (4) festgelegt ist,
wobei das Gehäuse (4) das Gehäuse eines Hydraulikzylinders oder eines pneumatisch betriebenen Zylinders ist,
wobei am Blockierträger (64) ein Rückstellmittel (66) angreift, welches bei Entspannung die Blockiereinheit (6) in den zweiten Zustand versetzt.

2. Lenksicherung nach Anspruch 1,
wobei das Blockierelement (62) entlang einer Blockierachse (B) relativ zur Stange (2) verlagerbar ist und quer zur Blockierachse (B) gegen Verlagerung relativ zum Gehäuse (4) gesichert ist,
wobei die Blockierachse (B) quer, vorzugsweise senkrecht, zur Stellachse (S) steht.

3. Lenksicherung nach Anspruch 2,
wobei die Blockiereinheit (6) in den zweiten Zustand gelangt, wenn die vom Rückstellmittel (66) auf das Blockierelement (62) übertragene Kraft die von dem Haltemittel (65) auf das Blockierelement (62) übertragene Kraft überwiegt.

4. Lenksicherung nach einem der vorhergehenden Ansprüche,
wobei der Blockierträger (64) ein Blockiergehäuse und einen Deckel (67) aufweist.

5. Lenksicherung nach einem der Ansprüche 3 oder 4,
wobei der Blockierträger (64) zusätzlich auch stoffschlüssig am Gehäuse (4) festlegbar ist.

6. Lenksicherung nach einem der vorhergehenden Ansprüche ,
wobei der Eingriffsabschnitt (22) als Rücksprung ausgebildet ist,
wobei der Eingriffsabschnitt (22) einen Fasenbereich (22a) aufweist, und
wobei der Fasenbereich (22a) schräg zur Stellachse (S) steht.

7. Lenksicherung nach einem der vorhergehenden Ansprüche,
wobei der Eingriffsabschnitt (22) einen Sperrbereich (22b) aufweist, und
wobei der Sperrbereich (22b) zumindest bereichsweise senkrecht zur Stellachse (S) steht.

8. Lenksicherung nach einem der vorhergehenden Ansprüche,
wobei das Gehäuse (4) als Hydraulikzylinder ausgebildet ist,
wobei an der Stange (2) ein Kolben (24) festlegbar ist, welcher hydraulisch oder pneumatisch betrieben eine Kraft längs der Stellachse (S) auf die Stange (2) überträgt.

9. Lenksicherung nach Anspruch 8,
wobei zwei Kolben (24) an der Stange (2) festgelegt sind,
wobei der Eingriffsbereich (22) zwischen den Kolben (24) an der Stange (2) angeordnet ist.

10. Lenksicherung nach einem der vorhergehenden Ansprüche,
wobei das Gehäuse (4) zwei Anschlüsse (42) aufweist, über welche ein Fluid in das Gehäuse (4) ein- und aus dem Gehäuse (4) ausleitbar ist.

11. Lenksicherung nach einem der vorhergehenden Ansprüche,
wobei die Stange (2) die Spurstange eines Lenksystems ist, und
wobei die Blockiereinheit (6) in ihrem zweiten Zustand unmittelbar an der Stange (2) angreift.

## Claims

1. Steering lock comprising a rod (2), a housing (4) and a blocking unit (6),
wherein the rod (2) is guided on the housing (4) along a positioning axis (S),
wherein the blocking unit (6) can be brought into a first state in which it is out of engagement with the rod (2),
wherein the blocking unit (6) can be brought into a second state in which it is in engagement with the rod (2) and secures the rod (2) against displacement along the positioning axis (S),
wherein the rod (2) has an engagement portion (22),
wherein the blocking unit (6) comprises a blocking element (62),
wherein, in the second state of the blocking unit (6), the blocking element (62) forms an undercut with the engagement portion (22), which undercut acts parallel to the positioning axis (S),
wherein the blocking element (62) has a retaining portion (63) on which a retaining means (65) is engageable to space the blocking element (62) from the rod (2) and to retain the blocking unit (6) in the first state,
wherein the retaining means (65) is compressed air, and
wherein the blocking unit (6) comprises a blocking support (64) which is fixed to the housing (4) via a thread,
wherein the housing (4) is the housing of a hydraulic cylinder or a pneumatically operated cylinder,
wherein a resetting means (66) engages on the blocking carrier (64), which resetting means (66) moves the blocking unit (6) into the second state when the tension is released.

2. Steering lock according to claim 1,
wherein the blocking element (62) is displaceable along a blocking axis (B) relative to the rod (2) and is secured transversely to the blocking axis (B) against displacement relative to the housing (4),
wherein the blocking axis (B) is transverse, preferably perpendicular, to the positioning axis (S).

3. Steering lock according to claim 2,
wherein the locking unit (6) enters the second state when the force transmitted by the resetting means (66) to the blocking element (62) exceeds the force transmitted by the retaining means (65) to the blocking element (62).

4. Steering lock according to any of the preceding claims,
wherein the blocking carrier (64) comprises a blocking housing and a cover (67).

5. Steering lock according to one of claims 3 or 4,
wherein the blocking carrier (64) can additionally also be fixed to the housing (4) in a material-locking manner.

6. Steering lock according to any one of the preceding claims,
wherein the engagement portion (22) is formed as a recess,
wherein the engagement portion (22) has a chamfer region (22a), and
wherein the chamfer region (22a) is oblique to the positioning axis (S).

7. Steering lock according to any one of the preceding claims,
wherein the engagement portion (22) has a locking region (22b), and
wherein the locking region (22b) is perpendicular to the positioning axis (S) at least in some regions.

8. Steering lock according to any one of the preceding claims,
wherein the housing (4) is designed as a hydraulic cylinder,
wherein a piston (24) can be fixed to the rod (2), which piston (24), hydraulically or pneumatically operated, transmits a force along the positioning axis (S) to the rod (2).

9. Steering lock according to claim 8,
wherein two pistons (24) are fixed to the rod (2),
wherein the engagement portion (22) is arranged between the pistons (24) on the rod (2).

10. Steering lock according to any one of the preceding claims,
wherein the housing (4) has two connections (42) via which a fluid can be introduced into the housing (4) and discharged from the housing (4).

11. Steering lock according to any one of the preceding claims,
wherein the rod (2) is the tie rod of a steering system, and
wherein the blocking unit (6) in its second state engages directly with the rod (2).

## Revendications

1. Dispositif de blocage de direction comprenant une tige (2), un boîtier (4) et une unité de blocage (6),
dans lequel
la tige (2) est guidée le long d'un axe de réglage (S) sur le boîtier (4),
l'unité de blocage (6) peut être amenée dans un premier état dans lequel elle est hors de prise avec la tige (2),
l'unité de blocage (6) peut être amenée dans un deuxième état dans lequel elle est en prise avec la tige (2) et bloque la tige (2) à l'encontre d'un déplacement le long de l'axe de réglage (S),
la tige (2) présente une portion d'engagement (22),
l'unité de blocage (6) présente un élément de blocage (62),
dans le deuxième état de l'unité de blocage (6), l'élément de blocage (62) forme une contre-dépouille avec la portion d'engagement (22), laquelle agit parallèlement à l'axe de réglage (S),
l'élément de blocage (62) présente une portion de retenue (63) sur laquelle un moyen de retenue (65) peut être engagé pour écarter l'élément de blocage (62) de la tige (2) et pour maintenir l'unité de blocage (6) dans le premier état,
le moyen de retenue (65) est de l'air comprimé, et
l'unité de blocage (6) présente un support de blocage (64) qui est immobilisé sur le boîtier (4) par l'intermédiaire d'un filetage,
le boîtier (4) est le boîtier d'un vérin hydraulique ou d'un vérin à commande pneumatique,
un moyen de rappel (66) s'engage sur le support de blocage (64), qui, en cas de détente, met l'unité de blocage (6) dans le deuxième état.

2. Dispositif de blocage de direction selon la revendication 1,
dans lequel l'élément de blocage (62) peut être déplacé le long d'un axe de blocage (B) par rapport à la tige (2) et est bloqué transversalement à l'axe de blocage (B) à l'encontre d'un déplacement par rapport au boîtier (4),
l'axe de blocage (B) s'étend transversalement, de préférence perpendiculairement, à l'axe de réglage (S).

3. Dispositif de blocage de direction selon la revendication 2,
dans lequel l'unité de blocage (6) parvient dans le deuxième état lorsque la force transmise à l'élément de blocage (62) par le moyen de rappel (66) est supérieure à la force transmise à l'élément de blocage (62) par le moyen de retenue (65).

4. Dispositif de blocage de direction selon l'une des revendications précédentes,
dans lequel le support de blocage (64) comprend un boîtier de blocage et un couvercle (67).

5. Dispositif de blocage de direction selon l'une des revendications 3 ou 4, dans lequel le support de blocage (64) peut être immobilisé sur le boîtier (4) en supplément également par coopération de matière.

6. Dispositif de blocage de direction selon l'une des revendications précédentes,
dans lequel la portion d'engagement (22) est réalisée sous forme de retrait, la portion d'engagement (22) présente une zone de chanfrein (22a), et
la zone de chanfrein (22a) s'étend en oblique par rapport à l'axe de réglage (S).

7. Dispositif de blocage de direction selon l'une des revendications précédentes,
dans lequel la portion d'engagement (22) présente une zone d'arrêt (22b), et
la zone d'arrêt (22b) s'étend au moins localement perpendiculairement à l'axe de réglage (S).

8. Dispositif de blocage de direction selon l'une des revendications précédentes,
dans lequel le boîtier (4) est réalisé sous forme de vérin hydraulique,
un piston (24) peut être immobilisé sur la tige (2), lequel transmet à la tige (2) une force le long de l'axe de réglage (S), par commande hydraulique ou pneumatique.

9. Dispositif de blocage de direction selon la revendication 8,
dans lequel deux pistons (24) sont immobilisés sur la tige (2),
la zone d'engagement (22) est disposée entre les pistons (24) sur la tige (2).

10. Dispositif de blocage de direction selon l'une des revendications précédentes,
dans lequel le boîtier (4) présente deux raccords (42) par lesquels un fluide peut être introduit dans le boîtier (4) et être évacué du boîtier (4).

11. Dispositif de blocage de direction selon l'une des revendications précédentes,
dans lequel la tige (2) est la barre d'accouplement d'un système de direction, et
dans son deuxième état, l'unité de blocage (6) s'engage directement sur la tige (2).
